(19)

Europäisches Patentamt
European Patent Office
Office européen des brevets

(11) **EP 3 699 627 A1**

(12) **EUROPEAN PATENT APPLICATION**
published in accordance with Art. 153(4) EPC

(43) Date of publication:
**26.08.2020 Bulletin 2020/35**

(51) Int Cl.:
***G01S 5/22*** *(2006.01)*

(21) Application number: **18869067.1**

(86) International application number:
**PCT/JP2018/030361**

(22) Date of filing: **15.08.2018**

(87) International publication number:
**WO 2019/077856 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2017 JP 2017200260**

(71) Applicant: **Mitsubishi Heavy Industries Thermal Systems, Ltd.**
**Tokyo 108-8215 (JP)**

(72) Inventors:
• **MIZUNO, Hisao**
**Tokyo 108-8215 (JP)**

• **HIRAO, Toyotaka**
**Tokyo 108-8215 (JP)**
• **KONDO, Seiji**
**Tokyo 108-8215 (JP)**
• **NISHIKAWA, Naoki**
**Tokyo 108-8215 (JP)**
• **SAKURAI, Takao**
**Tokyo 108-8215 (JP)**
• **SHIMIZU, Kenji**
**Tokyo 108-8215 (JP)**
• **MARUYAMA, Masanori**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(54) **POSITION ESTIMATION DEVICE, AIR CONDITIONING SYSTEM, POSITION ESTIMATION METHOD, AND PROGRAM**

(57)     A position estimation device that is configured to estimate a position of a sound source in a space is provided. The position estimation device is configured to acquire times at which a sound output in a space has been detected by a plurality of microphones provided in the space, calculates an arrival time difference which is a difference between a time at which the sound has been detected by one microphone serving as a reference out of the plurality of microphones and a time at which the sound has been detected by another microphone on the basis of the acquired times, and estimates a position at which the sound has been output on the basis of a predetermined lookup table in which a relationship between the arrival time difference and a predetermined sound source position is defined and the arrival time differences which have been actually calculated.

FIG. 2

**Description**

[Technical Field]

The invention relates to a position estimation device, an air conditioning system, a position estimation method, and a program. Priority is claimed on Japanese Patent Application No. 2017-200260, filed October 16, 2017, the content of which is incorporated herein by reference.

[Background Art]

When air conditioning of a space such as an office is performed, control is often performed such that the room temperature or the like in the space is uniform. On the other hand, for example, a method of performing air conditioning control of the room temperature or the like on an area in which a user is located has been provided. When such control is performed, an air conditioning system needs to accurately estimate a position at which a user is located. Various methods of estimating a position have been provided in the related art.

For example, a method of estimating a position of a receiver on the basis of arrival times of radio waves which have been received from four GPS satellites of which positions are known is known. Here, when coordinates of the four satellites are (A1, B1, C1), (A2, B2, C2), (A3, B3, C3), and (A4, B4, C4), the coordinates of the position of the receiver are (x, y, z), a time lag of the receiver is d, and a speed of the radio waves is the speed of light c, the following simultaneous equations are acquired.

$$f1=(x-A1)^2+(y-B1)^2+(z-C1)^2-(c(t1-d))^2=0$$

$$f2=(x-A2)^2+(y-B2)^2+(z-C2)^2-(c(t2-d))^2=0$$

$$f3=(x-A3)^2+(y-B3)^2+(z-C3)^2-(c(t3-d))^2=0$$

$$f4=(x-A4)^2+(y-B4)^2+(z-C4)^2-(c(t4-d))^2=0$$

The position of the receiver is acquired by solving these equations, but solutions to the equations are generally obtained using approximate calculation such as a Newton-Raphson method. This approximate calculation requires a great processing load and there is a possibility that the capacity of a computer which is mounted in an air conditioner will be exceeded even when the approximate calculation is applied to control of the air conditioner. When the solutions are derived using the approximate calculation, the solutions may be local solutions depending on initial values in searching.

A method of estimating a direction from which a voice sound is uttered in order for a humanoid robot to communicate with a person by conversation is described in Patent Document 1.

[Citation List]

[Patent Literature]

[Patent Document 1]
Published Japanese Translation No. 2016-537622 of the PCT International Publication

[Summary of Invention]

[Technical Problem]

There is demand for a method of estimating a position at which a user is located with a calculation load which can be reasonably processed by a computer which is mounted in an air conditioner without causing local solutions.

The invention provides a position estimation device, an air conditioning system, a position estimation method, and a program that can solve the above-mentioned problems.

[Solution to Problem]

According to an aspect of the invention, there is provided a position estimation device including: a time information acquiring unit configured to acquire times at which a sound output in a space has been detected by a plurality of microphones provided in the space; an arrival time difference calculating unit configured to calculate an arrival time difference which is a difference between a time at which the sound has been detected by one microphone serving as a reference out of the plurality of microphones and a time at which the sound has been detected by another microphone on the basis of the acquired times; and a position estimating unit configured to estimate a position at which the sound has been output on the basis of a predetermined lookup table in which a relationship between the arrival time difference and a predetermined sound source position is defined and the arrival time differences which have been actually calculated by the arrival time difference calculating unit.

According to an aspect of the invention, the position estimating unit may be configured to estimate the sound source position according to the lookup table when a difference between the arrival time difference calculated by the arrival time difference calculating unit and the arrival time difference according to the lookup table is minimized as the position at which the sound has been output.

According to an aspect of the invention, a relationship between the sound source position and the arrival time differences which is expressed in a coordinate system with the center of gravity of the positions at which the plurality of microphones are disposed as an origin may be stored in the lookup table.

According to an aspect of the invention, a relationship between the arrival time difference and the sound source position according to an environmental condition of the space in which the microphones are disposed may be stored in the lookup table.

According to an aspect of the invention, the environmental condition of the space may be at least one of temperature, humidity, and atmospheric pressure.

According to an aspect of the invention, a relationship between the arrival time differences and the sound source position at a predetermined temperature may be stored in the lookup table, and the position estimating unit may be configured to correct the arrival time differences according to the lookup table on the basis of an actual temperature and to estimate the position at which the sound has been output on the basis of the corrected lookup table and the arrival time differences calculated by the arrival time difference calculating unit.

According to an aspect of the invention, the position estimation device further may include a map information preparing unit configured to prepare map information indicating a shape of the space on the basis of the position at which the sound has been output and which has been estimated by the position estimating unit for the sound which has been output while moving in the space.

According to an aspect of the invention, there is provided an air conditioning system including the above-mentioned position estimation device, wherein air conditioning is performed for the position at which the sound has been output and which has been estimated by the position estimation device.

According to an aspect of the invention, there is provided a position estimation method including: a step of acquiring times at which a sound output in a space has been detected by a plurality of microphones provided in the space; a step of calculating an arrival time difference which is a difference between a time at which the sound has been detected by one microphone serving as a reference out of the plurality of microphones and a time at which the sound has been detected by another microphone on the basis of the acquired times; and a step of estimating a position at which the sound has been output on the basis of a predetermined lookup table in which a relationship between the arrival time difference and a predetermined sound source position is defined and the arrival time differences which have been actually calculated in the step of calculating the arrival time difference.

According to an aspect of the invention, there is provided a program causing a computer to serve as: a means configured to acquire times at which a sound output in a space has been detected by a plurality of microphones provided in the space; a means configured to calculate an arrival time difference which is a difference between a time at which the sound has been detected by one microphone serving as a reference out of the plurality of microphones and a time at which the sound has been detected by another microphone on the basis of the acquired times; and a means configured to estimate a position at which the sound has been output on the basis of a predetermined lookup table in which a relationship between the arrival time difference and a predetermined sound source position is defined and the arrival time differences which have been actually calculated by the means configured to calculate the arrival time difference.

[Advantageous Effects of Invention]

With the position estimation device, the air conditioning system, the position estimation method, and the program, it is possible to accurately estimate a position with a small calculation load.

[Brief Description of Drawings]

FIG. 1 is a diagram showing an example of an air conditioning system according to an embodiment of the invention.
FIG. 2 is a block diagram showing an example of a position estimation device according to an embodiment of the invention.
FIG. 3 is a diagram showing an example of arrangement of microphones according to an embodiment of the invention.
FIG. 4 is a first diagram showing an arrival time difference according to an embodiment of the invention.
FIG. 5 is a second diagram showing an arrival time difference according to an embodiment of the invention.
FIG. 6 is a third diagram showing an arrival time difference according to an embodiment of the invention.
FIG. 7 is a diagram showing an example of a LUT according to an embodiment of the invention.
FIG. 8 is a first diagram showing an example of a result of position estimation according to an embodiment of the invention.
FIG. 9 is a second diagram showing an example of a result of position estimation according to an embodiment of the invention.
FIG. 10 is a flowchart showing an example of a position estimating process according to an embodiment of the invention.
FIG. 11 is a diagram showing an example of map information according to an embodiment of the invention.
FIG. 12 is a flowchart showing an example of a map information preparing process according to an embodiment of the invention.
FIG. 13 is a diagram showing an example of a hardware configuration of a position estimation device according to an embodiment of the invention.

[Description of Embodiments]

<Embodiment>

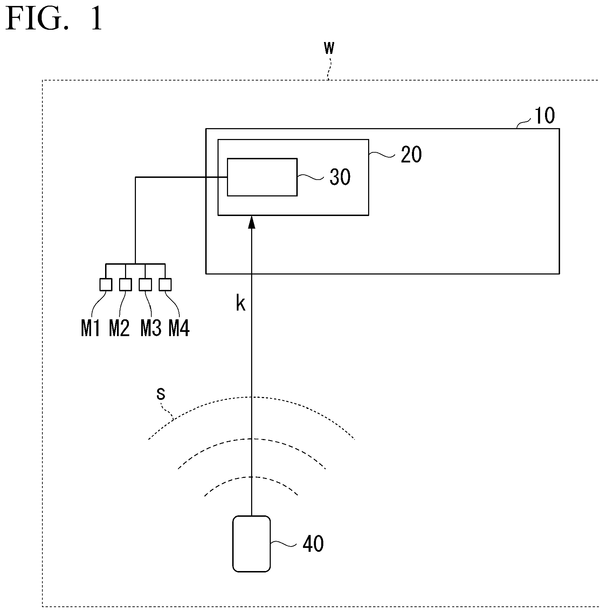

Hereinafter, a refrigerant circuit according to an embodiment of the invention will be described with reference to FIGS. 1 to 13.
FIG. 1 is a diagram showing an example of an air conditioning system according to an embodiment of the invention.
As shown in the drawing, an air conditioning system includes an air conditioner 10, a terminal device 40, and microphones M1 to M4. The air conditioner 10 includes a controller 20. The controller 20 controls operation of the air conditioner 10. The controller 20 has a function of controlling the air conditioner 10 such that it performs air conditioning for a partial area of a space w. The controller 20 includes a position estimation device 30. The position estimation device 30 estimates a position from which a sound s is produced on the basis of the sound s which is output from the terminal device 40. The controller 20 performs air conditioning control, for example, for the position estimated by the position estimation device 30. The terminal device 40 has a function of outputting a sound s of a predetermined frequency. The terminal device 40 has a function of transmitting information k designating an area in the space w in which the terminal device 40 is located to the air conditioner 10 (the controller 20). The terminal device 40 is, for example, an information processing device such as a smartphone. Alternatively, the terminal device 40 may be constituted by two devices including a device that outputs a sound and a device that outputs information k. The microphones M1 to M4 detect a sound which is output from the terminal device 40.
The position estimation device 30 estimates a position of a sound source (the terminal device 40) on the basis of a difference between times at which the microphones M1 to M4 have detected a sound s output from the terminal device 40, and the controller 20 performs air conditioning control for the position estimated by the position estimation device 30.
The position estimation device 30 has a function of preparing map information of the space w using estimation of a sound source position. The controller 20 acquires information k for designating an area in the space w designated by a user using the terminal device 40 in the map information prepared by the position estimation device 30 and performs air conditioning control for the area designated by the information k. The functions of the position estimation device 30 will be described below.

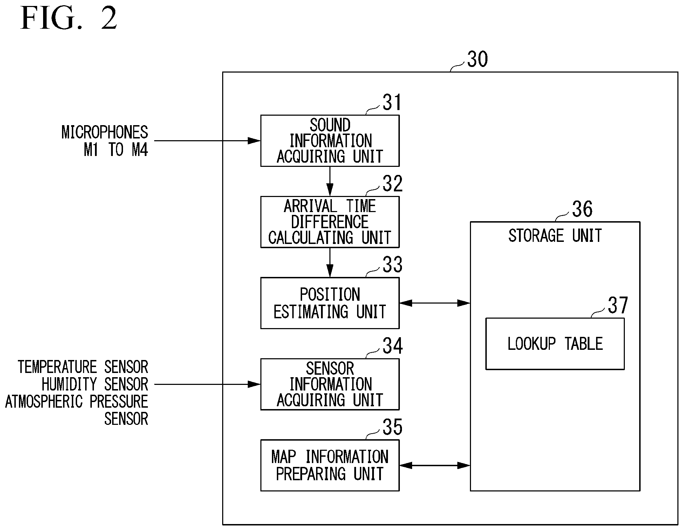

FIG. 2 is a block diagram showing an example of a position estimation device according to an embodiment of the invention.
The position estimation device 30 includes a sound information acquiring unit 31, an arrival time difference calculating unit 32, a position estimating unit 33, a sensor information acquiring unit 34, a map information preparing unit 35, and a storage unit 36.

The sound information acquiring unit 31 acquires a sound signal which is obtained by causing the microphones M1 to M4 to detect a sound s and to convert the sound into an electrical signal for each of the microphones M1 to M4. The sound information acquiring unit 31 stores the microphones M1 to M4 and times at which the sound s has been detected by the microphones (times at which the sound information acquiring unit 31 has acquired the sound signals) in the storage unit 36 in correlation with each other.

The arrival time difference calculating unit 32 sets one microphone (for example, the microphone M1) out of the microphones M1 to M4 as a reference and calculates differences between a time at which the microphone M1 serving as the reference has detected a sound s and times at which the other three microphones M2 to M4 have detected the sound s, that is, time differences (arrival time differences) between the time at which the sound s arrives at the microphone M1 and the times at which the sound s arrives at the microphones M2 to M4.

The position estimating unit 33 estimates a position at which the sound s has been output on the basis of the arrival time differences calculated by the arrival time difference calculating unit 32 and a lookup table 37 (hereinafter referred to as a LUT 37) which is stored in the storage unit 36. The LUT 37 includes a table in which a relationship between an arrival time difference between two microphones out of the microphones M1 to M4 and a predetermined sound source position in the space w is defined.

The sensor information acquiring unit 34 acquires information of temperature, humidity, and atmospheric pressure in the space w from a temperature sensor, a humidity sensor, and an atmospheric pressure sensor. The temperature sensor, the humidity sensor, and the atmospheric pressure sensor may be provided in the air conditioner 10 or may be provided in the space w. All of these sensors do not need to be provided and only one sensor may be provided.

The map information preparing unit 35 prepares map information of the space w using the position information estimated by the position estimating unit 33. More specifically, the map information preparing unit 35 prepares map information of the space w using the position information estimated by the position estimating unit 33 for a sound s which is output from the terminal device 40 while moving the terminal device 40 along the shape of the space w. The map information preparing unit 35 may be provided as a device which is independent from the position estimation device 30.

The storage unit 36 stores the LUT 37, the position information of the terminal device 40 estimated by the position estimating unit 33, the map information prepared by the map information preparing unit 35, and the like. The storage unit 36 may be a storage device which is provided in the position estimation device 30 or may be a storage device which is provided outside (for example, in a data center).

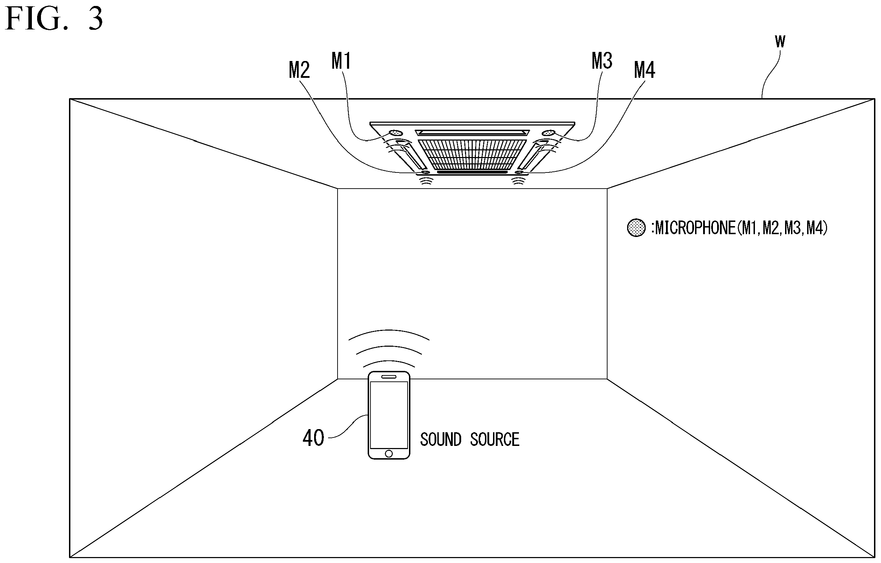

A position estimation method according to this embodiment will be described below with reference to FIGS. 3 to 9.

FIG. 3 is a diagram showing an example of arrangement of microphones according to an embodiment of the invention.

An example of arrangement of the microphones M1 to M4 is shown in FIG. 3. The microphones M1 to M4 are arranged on the ceiling of the space w, for example, such that the microphones M1 to M4 are vertices of a square shape with the center of a blower port of the air conditioner 10 as the center of gravity.

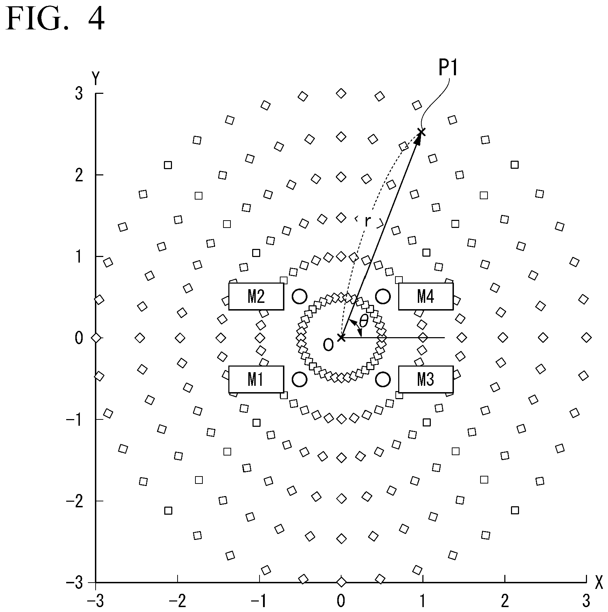

FIG. 4 is a first diagram showing an arrival time difference according to an embodiment of the invention.

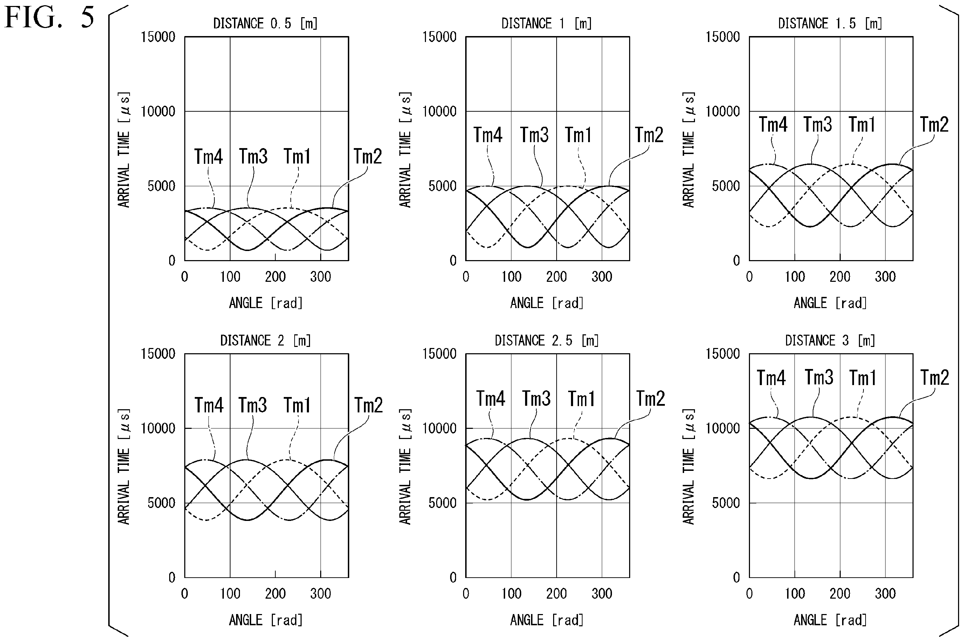

An example of a coordinate system for calculating an arrival time difference is shown in FIG. 4. First, the center of gravity of four microphones M1 to M4 is set as an origin o. Then, a position P1 in the space w can be expressed in polar coordinates (r, 0) using a distance r from the origin and an angle $\theta$ with a positive direction of an X axis as zero degrees. Times from a time point at which the terminal device 40 has output a sound s at the position P1 (which may be referred to as a sound source PI) to time points at which the microphones M1, M2, M3, and M4 detect the sound s are defined as Tm1, Tm2, Tm3, and Tm4. When the position of the sound source PI changes, the distances between the sound source P1 and the microphones M1 to M4 also change and thus the times Tm1 to Tm4 also change. The times Tm1 to Tm4 can be expressed as functions of r and $\theta$. This example is shown in FIG. 5.

FIG. 5 is a second diagram showing an arrival time difference according to an embodiment of the invention.

FIG. 5 is a graph representing a relationship between the angle $\theta$ and the arrival times Tm1 to Tm4 for each distance r. For example, the left-upper graph is a graph representing a relationship between the angle $\theta$ and the arrival times Tm1 to Tm4 when the distance r from the center of gravity of the microphones M1 to M4 is 0.5 m. The arrival times Tm1 to Tm4 change as shown in the graph with change in the distances between the microphones M1 to M4 and the sound source PI due to change in the angle $\theta$. The same is true of the other graphs. For example, the right-lower graph is a graph representing a relationship between the angle $\theta$ and the arrival times Tm1 to Tm4 when the distance r from the center of gravity of the microphones M1 to M4 is 3 m. In comparison with the left-upper graph (the distance r=0.5 m), the arrival times are longer according to the distance difference as a whole.

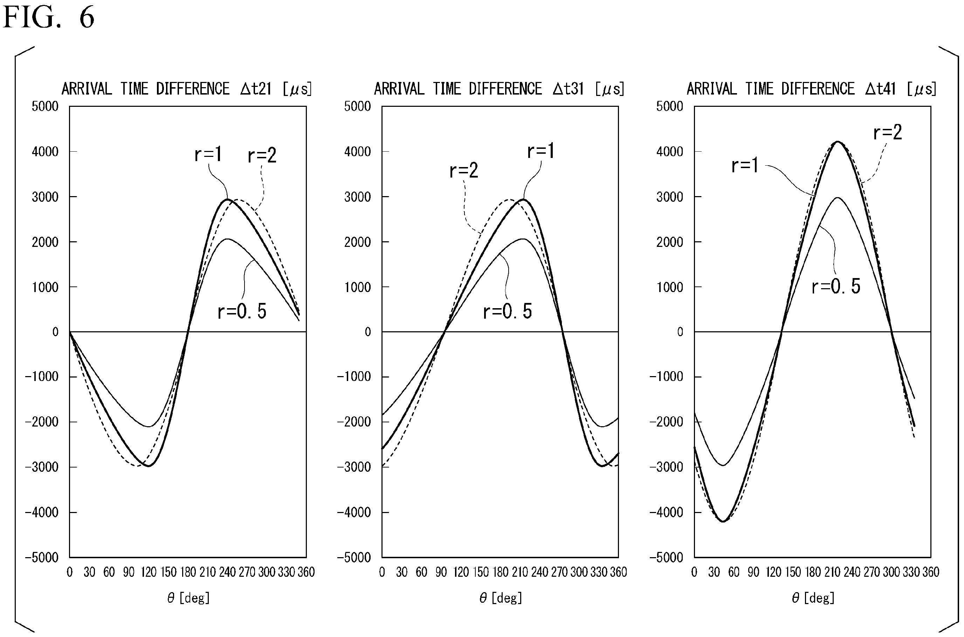

When the microphone M1 is set as a reference microphone and the time at which the microphone M1 detects a sound c is set as a reference time (time=0), the times (arrival time differences) at which other microphones M2 to M4 detect the sound c are as follows. That is, the arrival time difference ($\Delta$T21) of the microphone M2 is Tm2-Tml, the arrival time difference ($\Delta$T31) of the microphone M3 is Tm3-Tm1, and the arrival time difference ($\Delta$T41) of the microphone M4 is Tm4-Tm1. When the position of the sound source PI changes, the distances between the sound source PI and the microphones M1 to M4 change and thus $\Delta$T21, $\Delta$T31, and $\Delta$T41 also change. That is, $\Delta$T21, $\Delta$T31, and $\Delta$T41 can be

expressed as functions of r and θ. This example is shown in FIG. 6.

FIG. 6 is a third diagram showing an arrival time difference according to an embodiment of the invention.

In FIG. 6, a graph representing a relationship between the angle θ and the arrival time difference every distance r is shown for each of the arrival time differences ΔT21, ΔT31, and ΔT41. For example, the left graph represents a relationship between the arrival time difference and the angle θ when the distance r is 0.5 m, 1 m, and 2 m for the arrival time difference ΔT21. The arrival time changes as shown in the graph with change in a positional relationship between the position of the sound source PI of the sound s and the microphones M1 and M2. The same is true of the other graphs.

The graphs shown in FIGS. 5 and 6 are prepared by calculation, for example, on the basis of a relationship between the sound speed, the distance, and the arrival time (d=ct, where d denotes a distance, c denotes a sound speed, and t denotes an arrival time). Since the sound speed changes depending on the temperature, the graphs shown in FIGS. 5 and 6 may be prepared for each predetermined temperature. When the graphs of the arrival time differences ΔT21, ΔT31, and ΔT41 shown in FIG. 6 are prepared in advance and a sound s is output at a certain position PI in the space w, the position of the sound source P1 can be estimated on the basis of the arrival time differences ΔT21m, ΔT31m, and ΔT41m which are measured for the sound s. For example, when the arrival time difference ΔT21m is 2000 μs, position information of the sound source P1 can be estimated to be a position which is expressed by r=0.5 m and θ=240 degrees from the left graph. When the arrival time difference ΔT21m is 0 μs, the position of the sound source PI is a position which is expressed by one of r=0.5 m, 1 m, and 2 m and θ=0 degrees or 180 degrees. Since there are a plurality of candidates, reverse lookup can be performed on the remaining two graphs on the basis of ΔT31m and ΔT41m to estimate the position of the sound source P1. That is, the matching position among these candidates of the position information (coordinate information) acquired by performing reverse lookup on the corresponding graphs for ΔT21m, ΔT31m, and ΔT41m, is the estimated position of the sound source P1.

When the graph of the arrival time difference ΔT21 or the like is prepared for each temperature, it is possible to more accurately estimate the position of the sound source by performing reverse lookup with reference to the graph of the arrival time difference ΔT21 or the like corresponding to the room temperature of the space w.

For the purpose of convenience of explanation, the position of the sound source P1 is expressed by polar coordinates (FIG. 4) in a plane, but when four or more microphones can be provided and three or more graphs of the arrival time difference can be prepared, a three-dimensional position of the sound source PI can be estimated. For example, when a space w in which a user sits and performs business such as an office is supposed and a height direction of an air conditioning target can be fixed, a two-dimensional position can be estimated. In this case, when three or more microphones can be provided and two or more graphs of the arrival time difference can be prepared, the position of the sound source PI can be estimated.

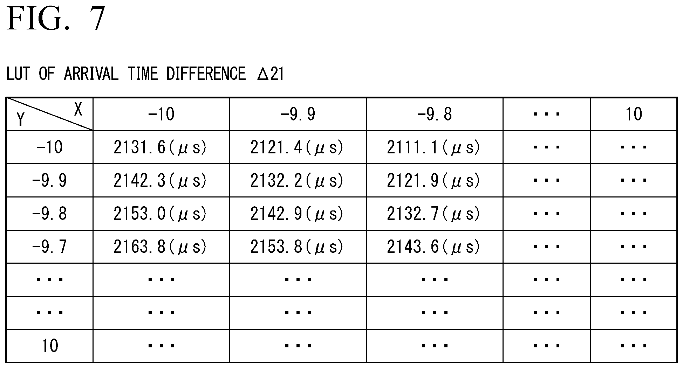

By representing the graphs shown in FIG. 6 in the form of a data table, a lookup table is obtained. FIG. 7 shows an example of a LUT 37 when a sound source position is expressed in two-dimensional coordinates.

FIG. 7 is a diagram showing an example of a LUT according to an embodiment of the invention.

FIG. 6 shows the graphs in which the position of the sound source PI is expressed by polar coordinates, and the LUT 37 shown in FIG. 7 is a table in which a relationship between the arrival time difference Δ21 and X and Y coordinates when the position of the sound source P1 is expressed by orthogonal coordinates is defined. Each column in the LUT 37 corresponds to a value of an X coordinate in the orthogonal coordinate system with the center of gravity of the microphones M1 to M4 shown in FIG. 4 as an origin, and each row corresponds to a value of a Y coordinate. The value of the arrival time difference Δt21 when the sound source PI is located at the coordinate position indicated by the corresponding row and column is shown in each cell in the table. This table can be prepared in the following order. (1) For example, a space is divided in a lattice shape within a range of X=[-10, 10], Y=[-10, 10] [m]. The lattice spacing is arbitrarily determined depending on the size of the space w. (2) Then, the arrival time ti at each microphone Mi (where i=1 to 4) when a sound is output at each lattice point (x, y) is calculated. Here, when a distance between each lattice point and each microphone Mi is defined as di and the sound speed is defined as c, the arrival time ti is ti=di/c. (3) Then, ΔT21, ΔT31, and ΔT41 with respect to the microphone M1 are calculated and a map of ΔT21(x, y), ΔT31(x, y), and ΔT41(x, y) is prepared. The LUT shown in FIG. 7 is an example of a table which is prepared as described above.

As in the graphs shown in FIG. 6, a LUT 37 in which items in the Z axis (the height direction) are included in the table and a relationship between three-dimensional coordinates of a sound source position and the arrival time difference Δt21 is defined can be used. The table shown in FIG. 7 is stored in the storage unit 36. As shown in the drawings, the LUTs 37 associated with the arrival time differences ΔT31 and ΔT41 are stored in the storage unit 36. LUTs 37 for the arrival time differences ΔT21, ΔT31, and ΔT41 at each temperature may be stored in the storage unit 36. The same is true of humidity and atmospheric pressure.

For example, when the value of the measured arrival time difference Δt21m is 2131.6, the position estimating unit 33 estimates that the position of the sound source is (10, 10) with reference to the LUT 37. The position estimating unit 33 calculates the coordinate information of the sound source PI using the LUT 37 for the value of the arrival time difference ΔT31m measured in the same way and the arrival time difference ΔT31 and the LUT 37 for the value of the measured arrival time difference ΔT41m and the arrival time difference ΔT41. Coordinate information corresponding to an arrival time difference which is not registered in the LUT 37 is calculated by linear interpolation, extrapolation, or the like. When a plurality of pieces of coordinate information calculated using the LUT 37 corresponding to the arrival time difference between the microphones match each other, the position estimating unit 33 estimates the position indicated by the coordinates as the position of the sound source PI. Alternatively, the position estimating unit 33 may calculate an average of a plurality of pieces of coordinate information acquired on the basis of the LUT 37 and set the position indicated by the average coordinates as the position of the sound source P1 of the sound s.

For example, the position estimating unit 33 may calculate coordinates (x, y) at which an error εRMS between the measured value of the arrival time difference and the arrival time difference registered in the LUT 37 which is defined by Equation (1) is minimized, and estimate the calculated coordinates (x, y) as the position information of the sound source PI.

[Equation 1]

$$\varepsilon_{RMS}[x,y]=\sqrt{\{(\Delta t_{21m}-\Delta t_{21}[x,y])^2+(\Delta t_{31m}-\Delta t_{31}[x,y])^2+(\Delta t_{41m}-\Delta t_{41}[x,y])^2\}}$$

Here, $\Delta T21m$, $\Delta T31m$, and $\Delta T41m$ are measured values of the arrival time difference, and $\Delta T21(x, y)$, $\Delta T31(x, y)$, and $\Delta T41(x, y)$ are values of the arrival time difference registered in the LUT 37 or values of the arrival time difference calculated by interpolation or extrapolation. The minimum value of Equation (1) can be efficiently calculated using a local search method, a steepest descent method, a least squares method, or the like.

In the LUT 37, a relationship between the polar coordinates and the arrival time difference may be defined.

An example of a result of estimation of the position of a sound source P1 using the position estimation method according to this embodiment will be described below.

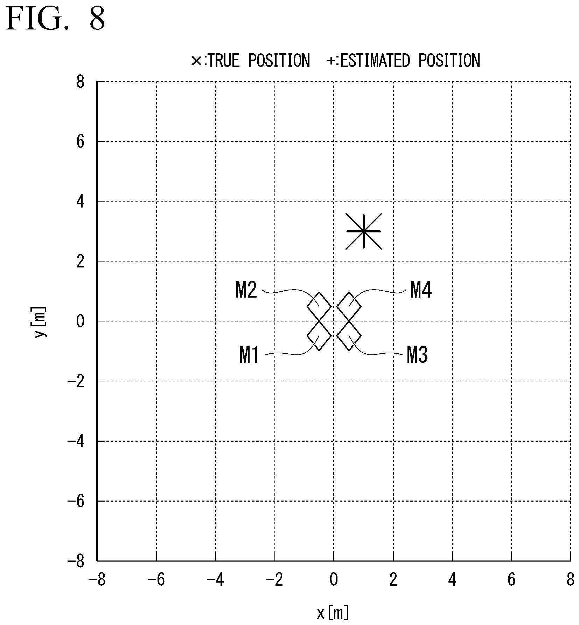

FIG. 8 is a first diagram showing an example of a result of position estimation according to an embodiment of the invention.

XYZ coordinates of a true position of a sound source PI is supposed to be (1, 3, 3). A positional relationship between the microphones M1 to M4 and the sound source PI in which the height direction (the Z axis) is omitted is shown in the drawing. The estimation result of the coordinates of the sound source P1 using the position estimation method according to this embodiment is (1, 3, 3). On the other hand, the estimation result of coordinates using a method of calculating solutions of four simultaneous equations based on a Newton-Raphson method in the related art is (1, 3, 3). It can be ascertained from this estimation result that it is possible to decrease a calculation load and to accurately estimate the true position of the sound source P1, by performing estimation of a position using the arrival time differences $\Delta T21$, $\Delta T31$, and $\Delta T41$ and the LUT 37 according to this embodiment.

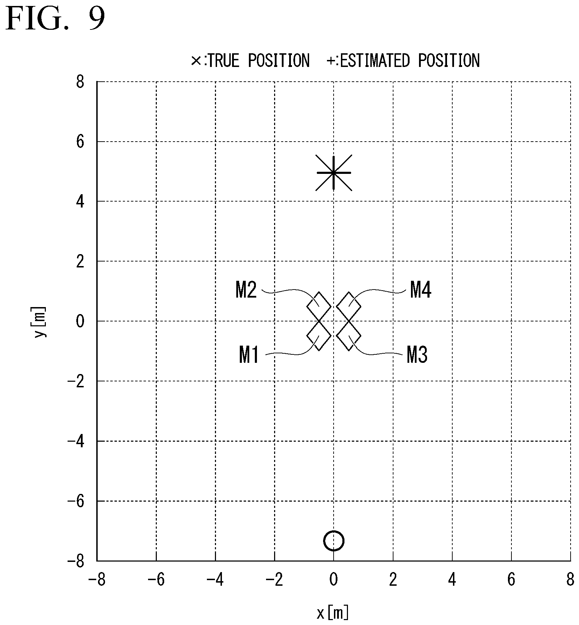

FIG. 9 is a second diagram showing an example of a result of position estimation according to an embodiment of the invention.

XYZ coordinates of a true position of a sound source PI is supposed to be (0, 5, 3). The estimation result of the coordinates of the sound source PI using the position estimation method according to this embodiment is (0, 5, 3). On the other hand, the estimation result of coordinates using a method of calculating solutions of four simultaneous equations based on a Newton-Raphson method in the related art is (0, -6.9, -2.6). The solution based on the method according to the related art is indicated by a circle in the drawing. When the sound source PI is located at a position which is separated by the same distance from two microphones (M1 and M3 or M2 and M4) as in this example, the position of the sound source P1 is a singular point and correct position estimation cannot be performed using the method according to the related art. On the other hand, with the position estimation method according to this embodiment, it can be ascertained that it is possible to accurately estimate the position even when the sound source P1 is located at the position which is separated by the same distance from two microphones.

A flow of the position estimation method according to this embodiment will be described below.

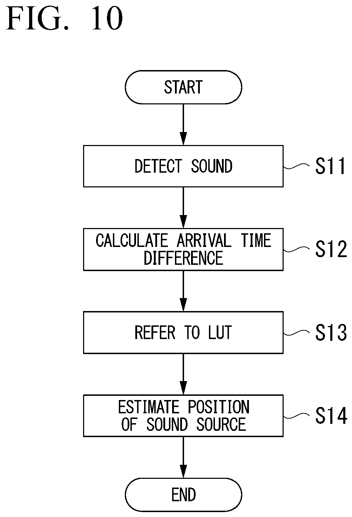

FIG. 10 is a flowchart showing an example of the position estimation method according to the embodiment of the invention.

As the premise, microphones M1 to M4 are provided on the ceiling of a space w. Correspondence tables between the arrival time differences $\Delta T21$, $\Delta T31$, and $\Delta T41$ and a position of a sound source PI (coordinate information), that is, the LUT 37 shown in FIG. 7, is stored in the storage unit 36.

A user moves to a desired position (an air-conditioning target area) in the space w and operates a terminal device 40 to output a sound s of a predetermined frequency. Then, the microphones M1 to M4 detect the sound s (Step S11). The sound information acquiring unit 31 acquires sound signals from the microphones M1 to M4. The sound information acquiring unit 31 stores times at which the sound signals are acquired from the microphones M1 to M4 and identification information of the microphones in the storage unit 36 in correlation with each other. Then, the arrival time difference calculating unit 32 calculates the arrival time differences $\Delta T21m$, $\Delta T31m$, and $\Delta T41m$ of the microphones M2, M3, and M4 with respect to the time at which a sound signal is acquired from the microphone M1 (Step S12). Then, the arrival time difference calculating unit 32 outputs the arrival time differences ΔT21m, ΔT31m, and ΔT41m which have been actually calculated to the position estimating unit 33.

Then, the arrival time difference calculating unit 32 acquires candidate values for coordinate information of the sound source P1 corresponding to (closest to) the arrival time differences ΔT21m, ΔT31m, and ΔT41m with reference to the LUT 37 shown in FIG. 7 (Step S13). At this time, when the same value as the arrival time difference ΔT21m or the like is not registered in the LUT 37, candidate values for the coordinate information of the sound source P1 are acquired by performing interpolation, extrapolation, or the like. Then, the position estimating unit 33 estimates the position of the sound source P1 on the basis of the candidate values of the coordinate information of the sound source PI acquired from the LUT 37 (Step S14). For example, the arrival time difference calculating unit 32 applies the candidate values of the coordinate information to Equation (1), additionally calculates coordinates (x, y, z) at which an error $\varepsilon_{RMS}$ is minimized, and estimates the position indicated by the coordinates (x, y, z) as the position of the sound source PI. Alternatively, the arrival time difference calculating unit 32 may calculate an average value of coordinate information 1 acquired from the LUT 37 on the basis of the arrival time difference ΔT21m, coordinate information 2 acquired from the LUT 37 on the basis of the arrival time difference ΔT31m, and coordinate information 3 acquired from the LUT 37 on the basis of the arrival time difference ΔT41m, and estimate the average value as the position information of the sound source PI. The position estimating unit 33 stores the estimated position information (coordinate information) in the storage unit 36.

In the LUT 37, the arrival time differences ΔT21, ΔT31, and ΔT41 and coordinate information of the sound source position may be determined for each of at least one of temperature, humidity, and atmospheric pressure. In this case, the position estimating unit 33 selects a table corresponding to the temperature or the like from the LUT 37 on the basis of at least one of temperature, humidity, and atmospheric pressure and the actual arrival time difference ΔT21m or the like. The position estimating unit 33 acquires candidate values for the coordinate information of the sound source PI with reference to the selected table. For example, the sensor information acquiring unit 34 acquires the room temperature of the space w from a temperature sensor and outputs the acquired room temperature to the position estimating unit 33. The position estimating unit 33 acquires coordinate information with reference to a table which is prepared for the temperature closest to the room temperature in the LUT 37 on the basis of the room temperature and the arrival time difference ΔT21m. The same is true of the arrival time differences ΔT31m and ΔT41m. Then, the position estimating unit 33 estimates the position of the sound source PI using Equation (1).

As described above, the sound speed c [m/s], the distance d [m] between the sound source P1 and the microphone M1, and the arrival time t [s] have the following relationship.

$$d = c(T) \times t$$

Here, the sound speed c(T) is a function of the temperature T, and the following equation is empirically established.

$$c(T) = 331.5 + 0.6 \times T \ [m/s]$$

(where T[degC] is a Celsius temperature)

Accordingly, when the LUT 37 is not prepared for various temperatures and, for example, an LUT 37 at a certain temperature (25 degC) is prepared, a corrected arrival time difference based on the sound speed which has been corrected in consideration of an influence of the temperature in the sequences (1) to (3) (paragraph 0036) using the temperature acquired by the sensor information acquiring unit 34 can be calculated, and a table corresponding to an arbitrary temperature can be prepared.

By performing simulation on the atmospheric pressure or the humidity as an environment condition affecting the sound speed except the temperature, the sound speed depending on the atmospheric pressure or the humidity may be calculated and a table corresponding to an atmospheric pressure or a humidity may be prepared.

According to this embodiment, it is possible to estimate an accurate position of a sound source P1 on the basis of the differences between times at which a sound output from the sound source P1 arrives at the microphones M1 to M4 and LUTs 37 in which differences between times at which a sound arrives at the microphones M1 to M4 when the sound has been output at various positions in the space w, and the positions at which the sound has been output are correlated. In the position estimation method based on the arrival time difference and the LUT 37 according to this embodiment, a calculation load thereof is relatively small, there is no problem in that a local solution is caused, and an accurate position can be estimated. Accordingly, the position estimation method can be suitably used for a position estimation device 30 such as a microcomputer which is included in an air conditioner 10.

Since the position estimation device 30 according to this embodiment is provided, the controller 20 can perform air conditioning control on an area desired by a user.

By allowing a user to carry a terminal device 40 and setting the terminal device 40 to output a sound s at intervals of a predetermined time, the controller 20 can change an air-conditioning target area to follow movement even when the user moves in the space w, and thus satisfaction of the user is improved. In a case in which estimation of three-dimensional coordinates of a sound source P1 is performed, when a space w includes a plurality of floors and, for example, a user moves from the first floor to the second floor, an air-conditioning target area can be automatically changed to the second floor to improve convenience.

Positions which are estimated by the position estimation device 30 may be accumulated and air conditioning control may be performed on the basis of a result of estimation in a predetermined period. For example, when a time in which a user in a space w stays at a certain position (for example, a place in which a sofa is provided) is long, the controller 20 may perform air conditioning control for the position without a sound s being output from a terminal device 40. For example, a sound is set to be intermittently output from a terminal device 40, a moving line of a user is analyzed by accumulating position information with movement of the user, and a position of a doorway of the space w is estimated. Then, the controller 20 may perform control such that air is not blown toward the position of the doorway on the basis of the result of estimation of the doorway. Accordingly, it is possible to expect an effect of energy saving.

In the above-mentioned embodiment, all the microphones M1 to M4 are simultaneously used, but a position in a plane of a sound source PI can be estimated as long as there are three microphones. When a position in a plane is estimated, the position may be estimated using only the microphones M1 to M3 and the remaining microphone may be used when one microphone is out of order. Alternatively, three arbitrary microphones out of four microphones may be selected every time and estimation of a position may be performed using the selected microphones.

When a position in a plane is estimated, four position estimation processes including estimation using the microphones M1, M2, and M3, estimation using the microphones M1, M3, and M4, estimation using the microphones M1, M2, and M4, and estimation using the microphones M2, M3, and M4, may be performed as one time of estimation of a position of a sound source P1 and an average of the four results of estimation may be determined as the final position of the sound source P1.

In the above-mentioned embodiment, a sound s is output from the terminal device 40, but a sound of a user may be registered in advance, the position estimation device 30 may estimate the position at which the sound of the user is output, and the controller 20 may perform air conditioning control for the estimated position.

<Preparation of map information>

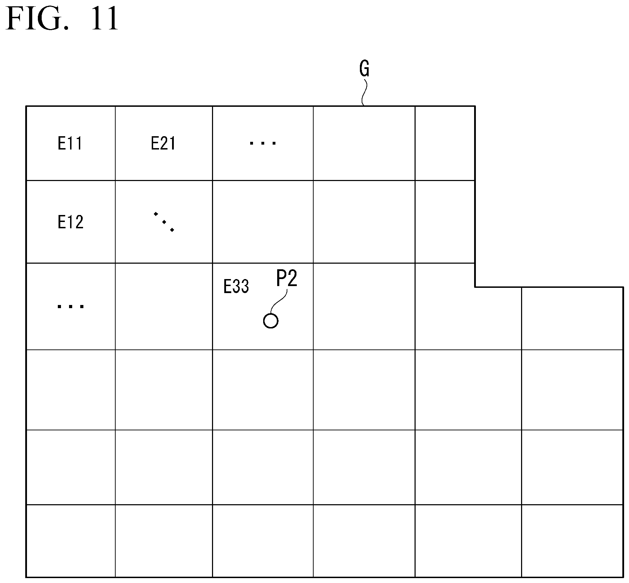

A method of preparing map information using position information which is estimated by the above-mentioned method and using the map information for air conditioning control will be described below. For example, a staff who performs installation work at the time of installation of an air conditioner 10 moves along an inner wall of a space w while outputting a sound sa from a terminal device 40a which is not shown. The position estimation device 30 acquires sound signals output from the microphones M1 to M4 at intervals of a predetermined period and estimates position information thereof. The map information preparing unit 35 prepares map information indicating a shape of the space w by plotting points indicated by the position information. The map information is a two-dimensional or three-dimensional diagram corresponding to the inner shape of the space w. An example of the map information is shown in FIG. 11.

FIG. 11 is a diagram showing an example of map information according to an embodiment of the invention.

The map information preparing unit 35 prepares map information G shown in FIG. 11 using coordinate information which is stored in the storage unit 36. For example, the map information preparing unit 35 may divide an inner area of the map information G into unit areas with a size in which the air conditioner 10 can separately perform air conditioning control. Each cell (E11 or the like) in FIG. 11 is a unit area after being divided. The map information preparing unit 35 stores the map information G in the storage unit 36.

The map information G is transmitted to, for example, a terminal device 40 which is owned by a user of the space w by the controller 20, and is displayed on a display screen of the terminal device 40. Then, the user selects a desired area from the display screen of the terminal device 40 (for example, P2 in FIG. 11). Then, the terminal device 40 transmits identification information E33 (information k) of the area including P2 to the controller 20. Then, the controller 20 performs air conditioning control for the area indicated by E33.

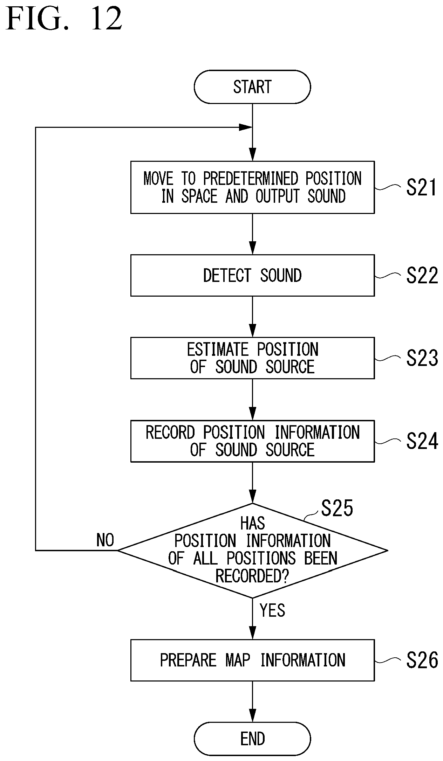

FIG. 12 is a flowchart showing an example of a process of preparing map information according to an embodiment of the invention.

As the premise, an installation staff moves in one direction along a wall of a space w. First, a staff who performs installation work of an air conditioner 10 moves to a predetermined position in the space w, operates a terminal device 40a, and outputs a sound sa from the terminal device 40a (Step S21). The microphones M1 to M4 detect the sound sa (Step S22) and outputs the sound signals to the position estimation device 30. In the position estimation device 30, the sound information acquiring unit 31 acquires the sound signals. The position estimating unit 33 estimates a sound source position at which the terminal device 40a has output the sound sa through the process flow described above with reference to the flowchart shown in FIG. 10 (Step S23). The position estimating unit 33 stores the estimated position information of the sound source in the storage unit 36 in correlation with the time at which the sound sa has been detected (Step S24). Then, the map information preparing unit 35 determines whether position information of all positions has been stored (Step S25). For example, when the installation staff performs an operation indicating that measurement of the space w has been completed using the terminal device 40a, the terminal device 40a transmits a measurement completion signal to the position estimation device 30. When the measurement completion signal is acquired, the map information preparing unit 35 determines that position information of all positions has been stored. When position information of all positions has not been stored (NO in Step S25), the processes of Step S21 and steps subsequent thereto are repeated. When position information of all positions has been stored (YES in Step S25), the map information preparing unit 35 combines the position information stored in the storage unit 36 in a time series in correlation with times at which the position information has been stored to prepare map information indicating the shape of the space w (Step S26).

By employing the position estimation method according to this embodiment, map information of a space w can be prepared and the prepared map information can be used to select an area which is an air-conditioning control target. The map information which is prepared by the map information preparing unit 35 may be three-dimensional map information indicating a three-dimensional shape of the space w.

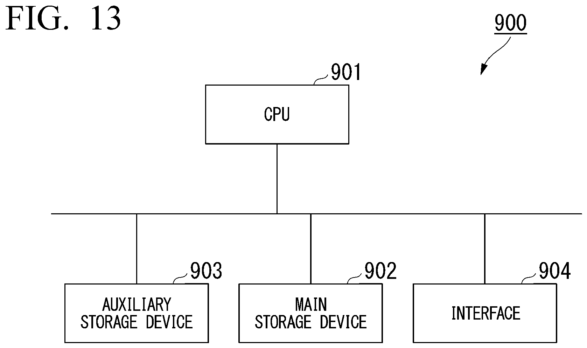

FIG. 13 is a diagram showing an example of a hardware configuration of a position estimation device according to an embodiment of the invention.

A computer 900 includes a CPU 901, a main storage device 902, an auxiliary storage device 903, and an interface 904.

The position estimation device 30 includes the computer 900. Operations of the processing units are stored in the form of a program in the auxiliary storage device 903. The CPU 901 reads the program from the auxiliary storage device 903, loads the program to the main storage device 902, and performs the above-mentioned processes in accordance with the program. The CPU 901 provides a storage area corresponding to the storage unit 36 in the main storage device 902 in accordance with the program.

In at least one embodiment, the auxiliary storage device 903 is an example of a non-transitory materialized medium. Other examples of the non-transitory materialized medium include a magnetic disk, a magneto-optical disc, an optical disc, and a semiconductor memory which are connected via the interface 904. When the program is transmitted to the computer 900 via a communication line, the computer 900 having received the program may load the program to the main storage device 902 and perform the above-mentioned processes.

The process sequences in the position estimation device 30 are stored in the form of a program in a computer-readable recording medium, and the processes are performed by causing the computer of the position estimation device 30 to read and execute the program. Examples of the computer-readable recording medium include a magnetic disk, a magneto-optical disc, a CD-ROM, a DVD-ROM, a semiconductor memory. The computer program may be transmitted to a computer via a communication line and the computer having received the program may execute the program.

The program may be provided for realizing some of the above-mentioned functions. The program may be a program which can realize the above-mentioned functions in combination with a program which is recorded in a computer system in advance, that is, a so-called differential file (a differential program). The position estimation device 30 may be constituted by a single computer or may be constituted by a plurality of computers which are communicatively connected to each other.

The constituents of the above-mentioned embodiment can be appropriately replaced with known constituents without departing from the gist of the invention. The technical scope of the invention is not limited to the above-mentioned embodiment and can be subjected to various modifications without departing from the gist of the invention. The sound information acquiring unit 31 is an example of a time information acquiring unit. The position of a sound source P1 is an example of a position at which a sound has been output.

[Industrial Applicability]

With the position estimation device, the air conditioning system, the position estimation method, and the program, it is possible to accurately estimate a position with a small calculation load.

[Reference Signs List]

| 10 | Air conditioner |
| 20 | Controller |
| 30 | Position estimation device |
| 31 | Sound information acquiring unit |

| 32 | Arrival time difference calculating unit |
| 33 | Position estimating unit |
| 34 | Sensor information acquiring unit |
| 35 | Map information preparing unit |
| 36 | Storage unit |
| 37 | LUT (lookup table) |
| 40 | Terminal device |
| M1, M2, M3, M4 | Microphone |
| w | Space |
| s | Sound |
| 900 | Computer |
| 901 | CPU |
| 902 | Main storage device |
| 903 | Auxiliary storage device |
| 904 | Interface |

**Claims**

1. A position estimation device comprising:

   a time information acquiring unit configured to acquire times at which a sound output in a space has been detected by a plurality of microphones provided in the space;
   an arrival time difference calculating unit configured to calculate an arrival time difference which is a difference between a time at which the sound has been detected by one microphone serving as a reference out of the plurality of microphones and a time at which the sound has been detected by another microphone on the basis of the acquired times; and
   a position estimating unit configured to estimate a position at which the sound has been output on the basis of a predetermined lookup table in which a relationship between the arrival time difference and a predetermined sound source position is defined and the arrival time differences which have been actually calculated by the arrival time difference calculating unit.

2. The position estimation device according to claim 1, wherein the position estimating unit is configured to estimate the sound source position according to the lookup table when a difference between the arrival time difference calculated by the arrival time difference calculating unit and the arrival time difference according to the lookup table is minimized as the position at which the sound has been output.

3. The position estimation device according to claim 1 or 2, wherein a relationship between the sound source position and the arrival time differences which is expressed in a coordinate system with the center of gravity of the positions at which the plurality of microphones are disposed as an origin is stored in the lookup table.

4. The position estimation device according to any one of claims 1 to 3, wherein a relationship between the arrival time difference and the sound source position according to an environmental condition of the space in which the microphones are disposed is stored in the lookup table.

5. The position estimation device according to claim 4, wherein the environmental condition of the space is at least one of temperature, humidity, and atmospheric pressure.

6. The position estimation device according to any one of claims 1 to 3, wherein a relationship between the arrival time differences and the sound source position at a predetermined temperature is stored in the lookup table, and wherein the position estimating unit is configured to correct the arrival time differences according to the lookup table on the basis of an actual temperature and to estimate the position at which the sound has been output on the basis of the corrected lookup table and the arrival time differences calculated by the arrival time difference calculating unit.

7. The position estimation device according to any one of claims 1 to 6, further comprising a map information preparing unit configured to prepare map information indicating a shape of the space on the basis of the position at which the sound has been output and which has been estimated by the position estimating unit for the sound which has been output while moving in the space.

8. An air conditioning system comprising the position estimation device according to any one of claims 1 to 7, wherein air conditioning is performed for the position at which the sound has been output and which has been estimated by the position estimation device.

9. A position estimation method comprising:

a step of acquiring times at which a sound output in a space has been detected by a plurality of microphones provided in the space;
a step of calculating an arrival time difference which is a difference between a time at which the sound has been detected by one microphone serving as a reference out of the plurality of microphones and a time at which the sound has been detected by another microphone on the basis of the acquired times; and
a step of estimating a position at which the sound has been output on the basis of a predetermined lookup table in which a relationship between the arrival time difference and a predetermined sound source position is defined and the arrival time differences which have been actually calculated in the step of calculating the arrival time difference.

10. A program causing a computer to serve as:

a means configured to acquire times at which a sound output in a space has been detected by a plurality of microphones provided in the space;
a means configured to calculate an arrival time difference which is a difference between a time at which the sound has been detected by one microphone serving as a reference out of the plurality of microphones and a time at which the sound has been detected by another microphone on the basis of the acquired times; and
a means configured to estimate a position at which the sound has been output on the basis of a predetermined lookup table in which a relationship between the arrival time difference and a predetermined sound source position is defined and the arrival time differences which have been actually calculated by the means configured to calculate the arrival time difference.

FIG. 1

# FIG. 2

```
                                                    ⌒30
     ┌──────────────────────────────────────────────────────────┐
     │                                        ⌒31                │
     │                              ┌─────────────────┐          │
MICROPHONES                         │     SOUND       │          │
M1 TO M4  ──────────────────────▶   │  INFORMATION    │          │
                                    │ ACQUIRING UNIT  │          │
                                    └─────────────────┘          │
                                             │     ⌒32           │
                                             ▼                   │
                                    ┌─────────────────┐          │
                                    │  ARRIVAL TIME   │          │
                                    │   DIFFERENCE    │          │
                                    │ CALCULATING UNIT│          │
                                    └─────────────────┘          │
                                             │     ⌒33      ⌒36  │
                                             ▼         ┌──────────────────┐
                                    ┌─────────────────┐│  STORAGE UNIT    │
                                    │    POSITION     ││                  │
                                    │ ESTIMATING UNIT │◀──▶              │
                                    └─────────────────┘│            ⌒37  │
                                             ⌒34       │  ┌─────────────┐ │
TEMPERATURE SENSOR                  ┌─────────────────┐│  │             │ │
HUMIDITY SENSOR                     │     SENSOR      ││  │LOOKUP TABLE │ │
ATMOSPHERIC PRESSURE ──────────▶    │  INFORMATION    ││  │             │ │
         SENSOR                     │ ACQUIRING UNIT  ││  └─────────────┘ │
                                    └─────────────────┘│                  │
                                             ⌒35       │                  │
                                    ┌─────────────────┐│                  │
                                    │ MAP INFORMATION ││                  │
                                    │ PREPARING UNIT  │◀──▶              │
                                    └─────────────────┘└──────────────────┘
     └──────────────────────────────────────────────────────────┘
```

FIG. 3

M2  M1                    M3  M4                    W

⊚ :MICROPHONE(M1,M2,M3,M4)

40  SOUND SOURCE

EP 3 699 627 A1

FIG. 4

FIG. 5

DISTANCE 0.5 [m]

DISTANCE 1 [m]

DISTANCE 1.5 [m]

DISTANCE 2 [m]

DISTANCE 2.5 [m]

DISTANCE 3 [m]

FIG. 6

EP 3 699 627 A1

# FIG. 7

LUT OF ARRIVAL TIME DIFFERENCE △21

| Y＼X | −10 | −9.9 | −9.8 | ・・・ | 10 |
|---|---|---|---|---|---|
| −10 | 2131.6($\mu$s) | 2121.4($\mu$s) | 2111.1($\mu$s) | ・・・ | ・・・ |
| −9.9 | 2142.3($\mu$s) | 2132.2($\mu$s) | 2121.9($\mu$s) | ・・・ | ・・・ |
| −9.8 | 2153.0($\mu$s) | 2142.9($\mu$s) | 2132.7($\mu$s) | ・・・ | ・・・ |
| −9.7 | 2163.8($\mu$s) | 2153.8($\mu$s) | 2143.6($\mu$s) | ・・・ | ・・・ |
| ・・・ | ・・・ | ・・・ | ・・・ | ・・・ | ・・・ |
| ・・・ | ・・・ | ・・・ | ・・・ | ・・・ | ・・・ |
| 10 | ・・・ | ・・・ | ・・・ | ・・・ | ・・・ |

FIG. 8

× :TRUE POSITION   + :ESTIMATED POSITION

FIG. 9

×:TRUE POSITION  +:ESTIMATED POSITION

FIG. 10

```
            ┌──────────┐
            │  START   │
            └──────────┘
                 │
                 ▼
        ┌──────────────────┐
        │  DETECT SOUND    │ ～ S11
        └──────────────────┘
                 │
                 ▼
        ┌──────────────────┐
        │ CALCULATE ARRIVAL TIME │ ～ S12
        │    DIFFERENCE    │
        └──────────────────┘
                 │
                 ▼
        ┌──────────────────┐
        │   REFER TO LUT   │ ～ S13
        └──────────────────┘
                 │
                 ▼
        ┌──────────────────┐
        │ ESTIMATE POSITION │ ～ S14
        │ OF SOUND SOURCE  │
        └──────────────────┘
                 │
                 ▼
            ┌──────────┐
            │   END    │
            └──────────┘
```

FIG. 11

G

| E11 | E21 | ・・・ | | |
| E12 | ⋱ | | | |
| ・・・ | | E33　P2 | | | |
| | | | | | |
| | | | | | |
| | | | | | |

FIG. 12

```
              ┌─────────┐
              │  START  │
              └─────────┘
                   │
                   ▼
    ┌──────────────────────────────────┐
    │  MOVE TO PREDETERMINED POSITION  │ ～ S21
    │     IN SPACE AND OUTPUT SOUND    │
    └──────────────────────────────────┘
                   │
                   ▼
    ┌──────────────────────────────────┐
    │          DETECT SOUND            │ ～ S22
    └──────────────────────────────────┘
                   │
                   ▼
    ┌──────────────────────────────────┐
    │        ESTIMATE POSITION         │ ～ S23
    │        OF SOUND SOURCE           │
    └──────────────────────────────────┘
                   │
                   ▼
    ┌──────────────────────────────────┐
    │    RECORD POSITION INFORMATION   │ ～ S24
    │        OF SOUND SOURCE           │
    └──────────────────────────────────┘
                   │
                   ▼
                           S25
              ╱─────────────────────╲
             ╱          HAS           ╲
    NO      ╱  POSITION INFORMATION    ╲
◄──────────┤  OF ALL POSITIONS BEEN    │
            ╲       RECORDED?          ╱
             ╲─────────────────────────╱
                   │ YES
                   ▼
    ┌──────────────────────────────────┐
    │     PREPARE MAP INFORMATION      │ ～ S26
    └──────────────────────────────────┘
                   │
                   ▼
              ┌─────────┐
              │   END   │
              └─────────┘
```

FIG. 13

<u>900</u>

```
              ┌─ 901
       ┌──────────────┐
       │     CPU      │
       └──────────────┘
              │
   ┌──────────┼───────────────────────┐
   │          │                       │
┌─ 903     ┌─ 902                   ┌─ 904
┌──────────────┐ ┌──────────────┐ ┌──────────────┐
│  AUXILIARY   │ │     MAIN     │ │  INTERFACE   │
│STORAGE DEVICE│ │STORAGE DEVICE│ │              │
└──────────────┘ └──────────────┘ └──────────────┘
```

**EP 3 699 627 A1**

<table>
<tr><td colspan="2" align="center">**INTERNATIONAL SEARCH REPORT**</td><td colspan="2">International application No.<br>PCT/JP2018/030361</td></tr>
</table>

A.   CLASSIFICATION OF SUBJECT MATTER
Int.Cl. G01S5/22(2006.01)i

According to International Patent Classification (IPC) or to both national classification and IPC

B.   FIELDS SEARCHED

Minimum documentation searched (classification system followed by classification symbols)
Int.Cl. G01S5/00-G01S5/14, F24F11/00-F24F11/89

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 10-227849 A (FUJI XEROX CO., LTD.) 25 August 1998, paragraphs [0021]-[0105], fig. 1-21 (Family: none) | 1-10 |
| Y | JP 61-162765 A (NISSAN MOTOR CO., LTD.) 23 July 1986, page 2, lower left column, line 6 to page 5, upper left column, line 4 (Family: none) | 1-10 |
| Y | JP 2008-154130 A (MATSUSHITA ELECTRIC INDUSTRIAL CO., LTD.) 03 July 2008, paragraphs [0021]-[0040], fig. 1-7 (Family: none) | 4-8 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.10.2018 | 06.11.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT

| | International application No. |
|---|---|
| | PCT/JP2018/030361 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-134367 A (MITSUBISHI ELECTRIC CORPORATION) 17 June 2010, paragraphs [0012]-[0015], fig. 1, 2 (Family: none) | 8 |
| A | JP 2008-128726 A (YOKOHAMA NATIONAL UNIVERSITY) 05 June 2008, entire text, all drawings (Family: none) | 1-10 |
| A | JP 2008-8780 A (UNIV OF ELECTRO-COMMUNICATIONS) 17 January 2008, entire text, all drawings (Family: none) | 1-10 |
| A | KR 10-0958932 B1 (S1 CORPORATION) 19 May 2010, entire text, all drawings (Family: none) | 1-10 |

Form PCT/ISA/210 (continuation of second sheet) (January 2015)

**EP 3 699 627 A1**

## REFERENCES CITED IN THE DESCRIPTION

**Patent documents cited in the description**

- JP 2017200260 A
- JP 2016537622 W